Europäisches Patentamt

European Patent Office

Office européen des brevets

(11) Numéro de publication: **0 334 701**

**A1**

## (12) DEMANDE DE BREVET EUROPEEN

(21) Numéro de dépôt: **89400598.2**

(22) Date de dépôt: **03.03.89**

(51) Int. Cl.⁴: **G 02 C 9/00**
    G 02 C 7/16

(30) Priorité: **17.03.88 FR 8803429**

(43) Date de publication de la demande:
**27.09.89 Bulletin 89/39**

(84) Etats contractants désignés:
**AT BE CH DE ES GB IT LI LU NL**

(71) Demandeur: **LUNETTERIE HENRY JULLIEN**
**14 avenue C.Prost BP.511**
**F-39000 Lons-Le-Saunier (FR)**

(72) Inventeur: **Fauveau, Hugues**
**5 rue du Marché au Bois Blanc**
**F-39000 Lons-le-Saunier (FR)**

(74) Mandataire: **Doireau, Marc et al**
**OFFICE BLETRY 2, Boulevard de Strasbourg**
**F-75010 Paris (FR)**

(54) **Système amovible de fixation d'une face solaire sur une monture de lunettes.**

(57) Le système amovible de fixation d'une face solaire (3) sur une monture (2) de lunettes comprend deux attaches constituées chacune par deux éléments d'assemblage (6a,6b) respectivement portés par la monture (2) et par la face solaire (3), lesdits éléments étant emboîtables l'un das l'autre après déformation élastique de la face solaire.

FIG. 1

EP 0 334 701 A1

## Description

### Système amovible de fixation d'une face solaire sur une monture de lunettes.

La présente invention concerne un système amovible de fixation d'une face solaire sur une monture de lunettes.

D'une manière générale, il est courant de recourir à une protection solaire pour protéger ses yeux, notamment des rayons du soleil. Cette protection matérialisée par une face solaire teintée est soit directement fixée sur une monture pour former des lunettes de soleil, soit rapportée sur les verres optiques d'une paire de lunettes de correction de la vue. Par face solaire, il faut entendre aussi bien un seul verre teinté dénommé écran solaire, que deux verres teintés reliés entre eux par une armature métallique.

Pour rapporter une face solaire sur des verres optiques, on utilise généralement deux systèmes de fixation à pinces ou formant pinces qui viennent en prise sur les deux verres optiques, respectivement. Chaque système de fixation comprend au moins une patte fixée à la face solaire et qui vient au contact d'une face du verre optique associé, et au moins une patte qui, soit par déformation élastique de la face solaire, soit par sa propre élasticité, vient au contact de l'autre face du verre optique associé.

Ces systèmes de fixation à pinces ou formant pinces présentent l'inconvénient d'entraîner le rayage des verres optiques et ce, d'autant plus, que les pinces sont métalliques. En outre, ces systèmes de fixation sont tels, qu'une fois montés à la partie supérieure des verres optiques, la partie inférieure de la face solaire se retrouve au contact de la paroi inférieure correspondante des verres optiques. Un tel contact entraîne également un risque non négligeable de rayage des verres optiques par frottement, par suite des opérations répétées d'assemblage et de désassemblage de la face solaire.

Le but de l'invention est de concevoir un système de fixation qui supprime les inconvénients précités, tout en procurant d'autres avantages.

A cet effet, l'invention propose un système amovible de fixation d'une face solaire sur une monture de lunettes , qui se caractérise en ce qu'il comprend deux attaches constituées chacune par deux éléments d'assemblage respectivement portés par la monture et par la face solaire, lesdits éléments étant emboîtables l'un dans l'autre après déformation élastique de la face solaire.

Selon une autre disposition de l'invention, les deux éléments d'assemblage d'une attache sont constitués par deux éléments respectivement mâle et femelle montés par glissement l'un dans l'autre, la force de rappel élastique exercée par la face solaire étant suffisante pour maintenir celle-ci en place sur la monture.

Selon une autre disposition de l'invention, la rigidité du matériau constituant la monture doit être supérieure à la rigidité du matériau constituant la face solaire.

Selon une autre disposition de l'invention, chaque élément d'assemblage associé à la face solaire est porté par un bloc de support, avantageusement en matériau plastique, qui est fixé, par exemple de manière amovible, à la face solaire, cet élément d'assemblage étant de type mâle ou femelle suivant la configuration adoptée.

Selon une autre disposition de l'invention, les éléments d'assemblage mâle et femelle d'une attache sont de préférence en matière plastique.

Grâce à ces différentes dispositions, le système de fixation conforme à l'invention permet de réaliser des lunettes solaires à face solaire amovible, ce qui présente l'avantage de changer à volonté la face solaire et de remplacer facilement une face solaire défectueuse.

Le système de fixation conforme à l'invention permet également de rapporter une face solaire sur des verres optiques sans risque de rayage des verres, étant donné, d'une part, que le système de fixation n'a aucun contact direct avec les verres et, d'autre part, que les blocs de support de la face solaire sont assemblés à la monture d'une manière telle que la face solaire est toujours maintenue éloignée des verres optiques.

D'autres avantages, caractéristiques et détails ressortiront de la description explicative qui va suivre faite en référence aux dessins annexés donnés uniquement à titre d'exemple et dans lesquels:
- la figure 1 est une vue en perspective montrant l'assemblage d'une face solaire sur une monture de lunettes suivant un premier mode de réalisation appliqué à des lunettes de soleil,
- la figure 2 est une vue schématique de dessus du principe de déformation élastique de la face solaire nécessaire pour l'assemblage représenté à la figure 1, et
- les figures 3 et 4 sont des vues analogues aux figures 1 et 2 suivant un second mode de réalisation de l'invention appliqué à des lunettes optiques.

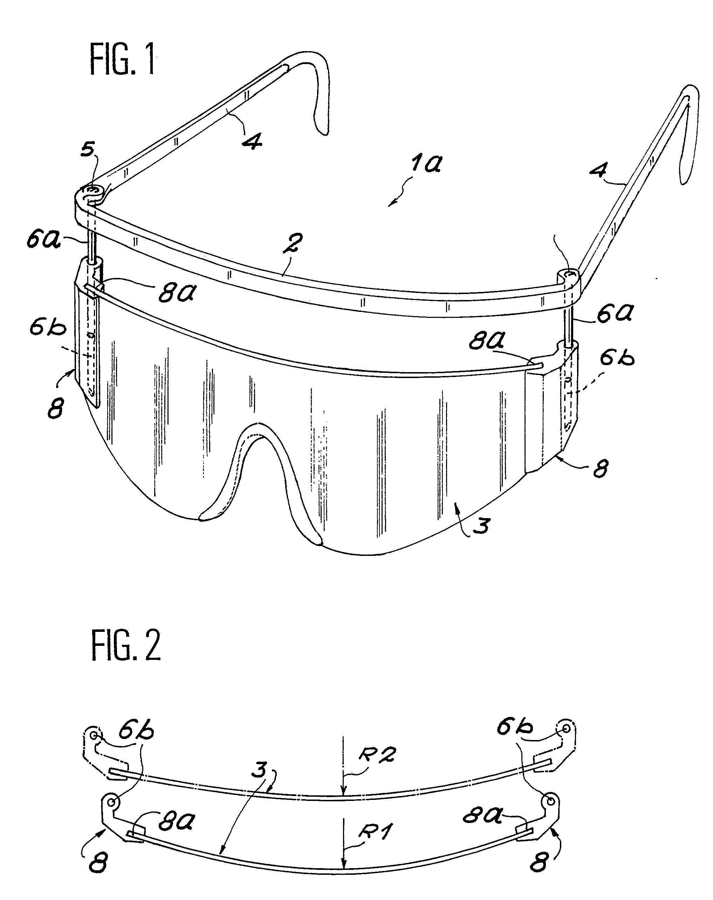

Les lunettes de soleil 1a représentées à la figure 1 comprennent une monture 2 et une face solaire 3 assemblées l'une à l'autre par un système de fixation conforme à l'invention.

Dans l'exemple considéré ici, la monture 2 est formée par une barrette de faible épaisseur, légèrement cintrée suivant un faible rayon de courbure. Deux branches 4 sont montées articulées aux deux extrémités de la monture 2, d'une manière connue en soi, au moyen de vis 5 par exemple.

La face solaire 3 est ici un écran solaire monobloc teinté en matière plastique et cintré suivant un rayon de courbure R1.

Le système de fixation de l'écran solaire 3 sur la monture 2 comprend deux attaches de structure identique. Chaque attache est formée d'un élément dit mâle 6a et d'un élément dit femelle 6b emboîtables l'un dans l'autre. Dans l'exemple considéré ici, l'élément mâle 6a est porté par la monture 2 et l'élément femelle 6b est porté par l'écran solaire 3.

Plus précisément, l'élément mâle 6a se présente sous la forme d'une tige qui, avantageusement, peut être constituée par le prolongement de la vis d'assemblage 5 entre monture 2 et branche 4, et l'élément femelle 6b est constituée par un trou prévu dans un bloc de support 8 en matière plastique.

L'écran solaire 3 supporte deux blocs de support 8 montés sur les deux bords latéraux sensiblement rectilignes de l'écran 3. Pour cela, chaque bloc support 8 possède au moins une face plane avec une rainure 8a dans laquelle s'engage à force un bord latérale de l'écran 3 par exemple.

L'écran solaire 3 et les deux blocs de support 8 ainsi assemblés forment un sous-ensemble qui, comme illustré en traits forts à la figure 2, est tel que la distance $x$ séparant les deux trous 6b des deux blocs de support 8 avant montage est inférieure à la distance $y$ séparant les deux tiges associées 6a. Pour permettre le montage, il suffit d'exercer une pression sur l'écran solaire 3 de manière à ce que, par déformation élastique de ce dernier, la distance $x$ soit rendue sensiblement égale à la distance $y$ pour que les deux tiges 6a soient sensiblement axialement alignées avec les trous 6b correspondants, comme illustré en traits mixtes à la figure 2. Autrement dit, il faut, par déformation élastique augmenter le rayon de courbure R1 de l'écran solaire 3 jusqu'à une valeur R2 pour rendre sensiblement égales les distances $x$ et $y$. Ensuite, par emboîtement glissant, les tiges 6a viennent s'engager dans les trous 6b, et l'assemblage est maintenu grâce à la force de rappel élastique exercée par l'écran solaire 3 lui-même.

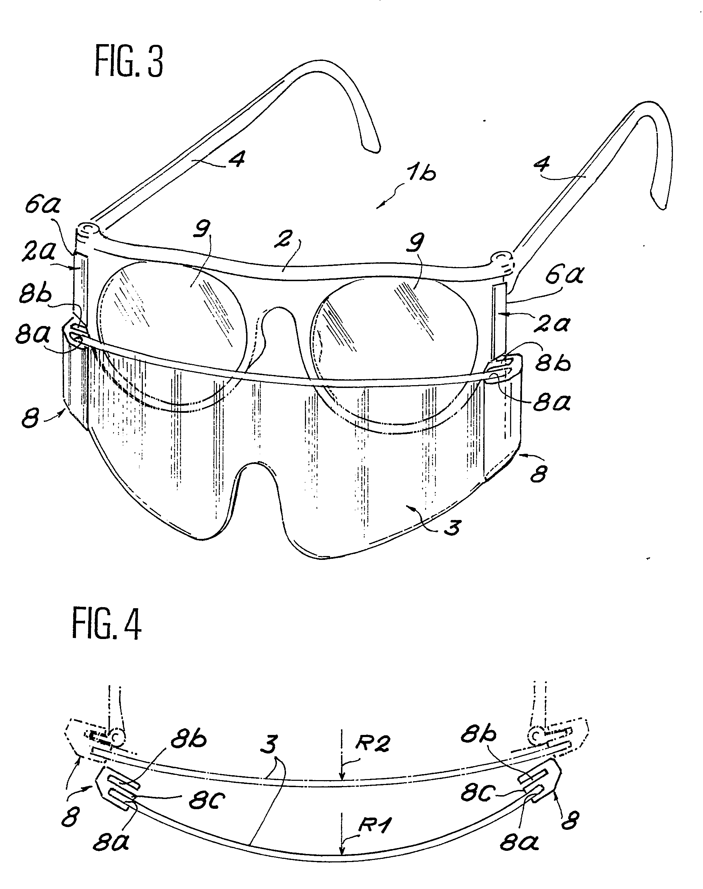

En référence aux figures 3 et 4, le système de fixation conforme à l'invention est appliqué, suivant un même principe, a une paire de lunettes optique 1b équipée de verres correcteurs 9 sur lesquels on vient rapporter un écran solaire 3 analogue à l'écran solaire précédemment décrit. Aussi, les mêmes chiffres de référence ont été conservés pour les éléments communs à ces deux modes de réalisation.

Dans le second mode de réalisation considéré ici, chaque bloc de support 8 comprend une deuxième rainure 8b sensiblement parallèle à la rainure 8b et située sur la même face du bloc de support 8. Cette rainure 8b constitue l'élément d'assemblage femelle de chaque attache du système de fixation. L'élément mâle est constitué par une arête externe 6a de la monture 2, sensiblement rectiligne et s'étendant dans un plan parallèle à la rainure 8b. En se reportant à la figure 4 et comme dans le mode de réalisation précédent, la distance séparant les deux rainures 8b est inférieure, avant montage, à la distance séparant les deux arêtes 6a de la monture 2, et par déformation élastique de l'écran solaire 3, ces deux distances sont rendues sensiblement égales pour permettre l'assemblage tel que montré à la figure 3.

Il est à noter que la partie de chaque bloc de support comprise entre les deux rainures 8a, 8b constitue une entretoise 8c qui permet de maintenir l'écran solaire 3 éloigné des verres correcteurs 9 afin d'éviter tout contact entre eux. L'espace séparant les verres correcteurs 9 de l'écran 3 est déterminé par l'épaisseur de l'entretoise 8c.

Dans les deux modes de réalisation, le principe de montage de l'écran solaire 3 suppose que la rigidité de la monture 2 est supérieure à celle de l'écran solaire 3.

En variante du mode de réalisation représenté aux figures 1 et 2, l'élément mâle 6a peut être une tige creuse ou percée, solidaire vers une extrémité du bloc de support 8, et filetée intérieurement vers son autre extrémité au pas de la vis d'assemblage 5 entre branche et monture. La vis 5, plus longue que la largeur des branches 4, vient alors se visser dans la tige qui, en plus, sert de contre-écrou pour empêcher le desserrage de la vis.

A titre d'exemple, les montures 2 peuvent être métalliques ou non, les éléments mâles 6a, et les blocs de support 8 étant avantageusement en matière plastique. En variante, chaque bloc de support 8 peut être vissé sur l'écran solaire 3, en particulier si il n'est pas réalisé dans la même matière que l'écran, ou bien chaque bloc de support 8 avec sa rainure 8b ou son trou 6b peut être réalisé dans la même matière que l'écran solaire 3 pour former un ensemble directement issu de moulage. Enfin, chaque bloc de support 8 peut être fixé par collage à l'écran 3.

Les éléments mâle 6a et femelle 6b, 8b sans changer le principe de l'invention peuvent être inversés, c'est-à-dire que l'élément mâle 6a peut être supporté par l'écran solaire 3 et que l'élément femelle 6b, 8b peut être supporté par la monture 2.

En outre, le système de fixation avec rainure 8b et arête (6a) tel que décrit selon le second mode de réalisation peut également être appliqué au premier mode de réalisation.

Bien entendu, l'invention n'est nullement limitée aux modes de réalisation qui n'ont été décrits qu'à titre d'exemple. En particulier, la face solaire constituée par un écran monobloc peut également être remplacée par une face solaire constituée par deux verres reliés par une armature métallique flexible.

## Revendications

1.- Système amovible de fixation d'une face solaire sur une monture de lunettes, caractérisé en ce qu'il comprend deux attaches constituées chacune par deux éléments d'assemblage (6a; 6b,8b) respectivement portés par la monture (2) et par la face solaire (3), lesdits éléments (6a,6b;6a,8b) étant emboîtables l'un dans l'autre après déformation élastique de la face solaire (3).

2.- Système selon la revendication 1, caractérisé en ce que la distance $x$ avant assemblage, séparant les deux éléments d'assemblage (6b,8b) portés par la face solaire (3) est inférieure à la distance $y$ séparant les deux éléments d'assemblage (6a,8a) portés par la monture (2), la distance $x$ étant rendue au moins égale à la distance $y$ pour l'assemblage par la déformation élastique de la face solaire (3) de forme cintrée.

3.- Système selon la revendication 1 ou 2, caractérisé en ce que la rigidité du matériau constituant la monture (2) est supérieure à la rigidité du matériau constituant la face solaire (3).

4.- Système selon l'une quelconque des revendications 1 à 3, caractérisé en ce que les deux éléments d'assemblage d'une attache sont constitués par deux éléments mâle (6a) et femelle (6b, 8b), respectivement.

5.- Système selon la revendication 4, caractérisé en ce qu'il comprend deux blocs de support (8) en matériau élastique rapportés sur les deux bords latéraux opposés de la face solaire (3), chaque bloc de support (8) comprenant l'un des éléments d'assemblage d'une attache.

6.- Système selon la revendication 5, caractérisé en ce que l'élément d'assemblage associé à chaque bloc de support (8) est un trou formant l'élément femelle (6b) dans lequel s'engage une tige (6a) solidaire de la monture (2) et formant l'élément mâle.

7.- Système selon la revendication 5, caractérisé en ce que l'élément d'assemblage associé à chaque bloc de support (8) est une rainure (8b) formant l'élément femelle prévu sur l'une des faces du bloc de support (8) et qui s'engage sur une arête (6a) de la monture (2) et formant élément mâle.

8.- Système selon la revendication 5 ou 6, caractérisé en ce que chaque bloc de support (8) comprend une rainure (8a) sur l'une de ses faces planes dans laquelle s'engage à force et de manière amovible un bord latéral de la face solaire (3).

9.- Système selon la revendication 7, caractérisé en ce que chaque bloc de support (8) comprend une autre rainure (8b) sensiblement parallèle à la rainure (8a) et dans laquelle s'engage à force de manière amovible un bord latéral de la face solaire (3).

10.- Paire de lunettes de soleil comprenant une monture et deux branches articulées à ladite monture, caractérisée en ce qu'elle est équipée d'une face solaire (3) amovible montée par un système de fixation tel que défini selon l'une quelconque des revendications 1 à 9.

11.- Paire de lunettes à verres optiques sur lesquels est rapportée une face solaire de manière amovible, caractérisée en ce que la face solaire (3) est fixée au moyen d'un système de fixation tel que défini selon l'une quelconque des revendications 1 à 9.

12.- Paire de lunettes selon la revendication 10 ou 11, comprenant des branches articulées à la monture au moyen de vis, caractérisée en ce que les éléments mâles (6a) des attaches sont constitués chacun par le prolongement des vis (5).

13.- Paire de lunettes selon la revendication 11 ou 12, caractérisée en ce que chaque élément mâle (6a) est une tige creuse filetée intérieurement au pas des vis (5), chaque vis (5) se vissant dans la tige associée formant également contre-écrou.

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-U-8 713 756  (ZOLLITSCH GmbH) <br> * Résumé * <br> --- | 1 | G 02 C    9/00 <br> G 02 C    7/16 |
| A | FR-A-2 553 905  (COFRAPLEX) <br> --- | | |
| A | US-A-3 945 044  (C.D. McGEE) <br> --- | | |
| A | FR-A-2 517 838  (R. BACKOUCHE) <br> ----- | | |

DOMAINES TECHNIQUES
RECHERCHES (Int. Cl.4)

G 02 C    9/00
G 02 C    7/16

Le présent rapport a été établi pour toutes les revendications

| Lieu de la recherche | Date d'achèvement de la recherche | Examinateur |
|---|---|---|
| LA HAYE | 05-06-1989 | CALLEWAERT-HAEZEBROUCK H |